# NEUE EUROPÄISCHE PATENTSCHRIFT

(11) **EP 3 022 167 B2**
(45) Veröffentlichungstag und Bekanntmachung des Hinweises auf die Entscheidung über den Einspruch: **30.04.2025**
(45) Hinweis auf die Patenterteilung: 19.09.2018
(21) Anmeldenummer: 14738837.5
(22) Anmeldetag: 14.07.2014
(51) Int. Cl.: C04B 28/14, C04B 24/28, C04B 7/02, C04B 14/06, C04B 22/00, C04B 7/32, C08G 59/50, C08L 63/00, C08G 59/54

(54) **KOMBINATION VON TERNÄREN BINDEMITTELN MIT WÄSSRIGEM EPOXIDHARZ-SYSTEM**
COMBINATION OF TERNARY BINDING AGENTS WITH AQUEOUS EPOXY RESIN SYSTEM
COMBINAISON DE LIANTS TERNAIRES AVEC UN SYSTÈME DE RÉSINE ÉPOXY AQUEUX

(30) Priorität: 16.07.2013 EP 13176717
(43) Veröffentlichungstag der Anmeldung: 25.05.2016
(73) Patentinhaber: Sika Technology AG, 6340 Baar (CH)
(72) Erfinder: WÜRMLI, Fabio, CH-8820 Wädenswil (CH); MOSER, Thomas, CH-8048 Zürich (CH); ROTH, Kurt, CH-5018 Erlinsbach (CH); HESSELBARTH, Daniela, CH-8048 Zürich (CH)
(74) Vertreter: Sika Patent Attorneys
(86) Internationale Anmeldenummer: PCT/EP2014/065041
(87) Internationale Veröffentlichungsnummer: WO 2015/007684

(56) Entgegenhaltungen:
- EP-A1- 0 786 439
- EP-A2- 0 434 214
- JP-A- H0 369 538
- JP-A- H07 315 907
- JP-A- H07 315 907

## Beschreibung

### Technisches Gebiet

Die Erfindung betrifft eine mehrkomponentige Zusammensetzung, ein Verfahren zum Beschichten, Verbinden, Abdichten oder Verfugen mit der mehrkomponentigen Zusammensetzung, das daraus hergestellte Produkt und die Verwendung der mehrkomponentigen Zusammensetzung als Mörtel oder Beschichtung, insbesondere für einen Bodenbelag.

### Stand der Technik

Mehrkomponentige Zusammensetzungen, die auf Epoxidharzen einerseits und Zement andererseits beruhen, sind schon seit vielen Jahren bekannt. Beispielhaft sei für den Stand der Technik auf die EP-A1-0786439 verwiesen. Diese Systeme haben mit der Entwicklung von wasserverdünnbaren Aminhärter-Komponenten für Epoxyharze wesentliche Weiterentwicklungen erfahren.

Das ECC (epoxy-cement-concrete)-System kann durch Zugabe von Epoxidharzen, die vorzugsweise in Wasser emulgierbar sind, und einem Härter zu Zementleim und anorganischen Additiven hergestellt werden. In diesem System laufen die Härtungsreaktionen des Zements und der Epoxidkomponente parallel ab, wobei sich aus dem Epoxidharz in Anwesenheit eines Härters ein Duromernetzwerk bildet. Derartige Zusammensetzungen weisen vielfältige Vorteile auf, wie zum Beispiel eine bessere Verarbeitbarkeit des Frischmörtels, eine bessere Haftung des Frisch- und Festmörtels auf dem Untergrund, ein besseres Wasserrückhaltevermögen, eine erhöhte Frosttausalzbeständigkeit sowie, abhängig von der verwendeten Epoxid-Komponente, eine bessere Elastizität des Festmörtels.

Die heutzutage eingesetzten ECC-Systeme weisen in der Regel einen recht hohen Gehalt an organischen Bindemittelkomponenten, d.h. Epoxidharz und Aminhärter, von 4 Gew.-% oder mehr auf. Diese Systeme weisen sehr gute Eigenschaften der daraus erhältlichen Produkte auf, z.B. hinsichtlich Druckfestigkeit, Haftfestigkeit, Schwund und Oberflächenfeuchtigkeit. Allerdings sind die Applikationseigenschaften bzw. die Verarbeitbarkeit dieser Zusammensetzungen nicht gut.

Durch Reduktion des Gehaltes an Epoxidharz und Aminhärter in der Zusammensetzung von etwa 4 Gew.-% auf etwa 1 Gew.-% konnte eine deutlich verbesserte Verarbeitbarkeit erzielt werden. Allerdings verschlechtern sich dadurch die Eigenschaften, wie Druckfestigkeit, Haftfestigkeit, Schwund und Oberflächenfeuchtigkeit, der daraus erhältlichen Produkte. Es besteht daher Bedarf nach Systemen, die Produkte mit guten Eigenschaften bereitstellen und gleichzeitig vernünftig verarbeitet werden können. Gleichzeitig ist die Reduzierung der notwendigen Menge an relativ kostspieligen Epoxidharzen und Aminhärtern ebenfalls wünschenswert.

JP H07-315907 A betrifft eine Zusammensetzung, die ein Epoxidharz, einen Härter, Portlandzement, Calciumaluminatzement, Gips und eine Lithiumverbindung enthält.

### Darstellung der Erfindung

Die Aufgabe der Erfindung bestand daher in der Bereitstellung einer ECC-Zusammensetzung, die die vorstehend beschriebenen Nachteile nicht mehr aufweist. Insbesondere soll eine mehrkomponentige Zusammensetzung bereitgestellt werden, die als Mörtel oder Bodenbeschichtung eingesetzt werden kann und ausgezeichnete Eigenschaften hinsichtlich Druckfestigkeit, Haftfestigkeit, Schwund und Oberflächenfeuchtigkeit aufweist und gleichzeitig eine ausreichende Verarbeitbarkeit zeigt. Eine weitere Aufgabe bestand darin, die erforderliche Menge an Epoxidharz möglichst gering zu halten. Die Aufgabe konnte überraschenderweise durch den Einsatz eines ternären Bindemittels gelöst werden.

Die Erfindung betrifft daher eine mehrkomponentige Zusammensetzung, umfassend
A) eine Binderkomponente (A) umfassend mindestens ein Epoxidharz,
B) eine Härterkomponente (B) umfassend mindestens eine Aminverbindung als Aminhärter und
C) eine feste Komponente (C) umfassend ein hydraulisches anorganisches Bindemittel,
wobei das hydraulische anorganische Bindemittel ein ternäres Bindemittel aus Tonerdezement, Calciumsulfat und gegebenenfalls Portlandzement ist und die feste Komponente (C) 5 bis 20 Gew.-% Tonerdezement, 3 bis 13 Gew.-% Calciumsulfat und 3 bis 10 Gew.-% Portlandzement enthält, und die Gesamtmenge an Epoxidharz und Aminhärter in der mehrkomponentigen Zusammensetzung, bezogen auf das Gesamtgewicht der mehrkomponentigen Zusammensetzung nicht mehr als 2 Gew.-% beträgt.

Durch den Einsatz des ternären Bindemittels können auch bei geringen Mengen an Epoxidharz und Aminhärter von weniger als 2 Gew.-% überraschenderweise Produkte mit sehr guten Eigenschaften, z.B. hinsichtlich Druckfestigkeit, Haftfestigkeit, Schwund und Oberflächenfeuchtigkeit, erhalten werden. Es wird insbesondere eine sehr hohe Druckfestigkeit erreicht, die sonst nur mit höheren Mengen an Epoxidharz und Aminhärter erreicht werden kann. Es zeigt sich auch eine gute Haftung und eine sehr geringe Schwindung. Ferner wird eine ausreichende Verarbeitbarkeit erhalten.

Desweiteren zeichnen sich die erfindungsgemäßen mehrkomponentigen Zusammensetzungen durch eine gute Chemikalienbeständigkeit und eine gute Haftung auf feuchten oder nassen Untergründen aus. Durch die rasche Reduzierung der Oberflächenfeuchtigkeit wird eine schnelle Überbeschichtbarkeit ermöglicht.

Bevorzugte Ausführungsformen der Zusammensetzung sind in den abhängigen Ansprüchen wiedergegeben. Die Erfindung betrifft auch ein Verfahren zum Beschichten, Verbinden, Abdichten oder Verfugen mit der Zusammensetzung, daraus hergestellte Produkte und die Verwendung der mehrkomponentigen Zusammensetzung als Mörtel oder Beschichtung, insbesondere als selbstverlaufende Bodenausgleichsmasse, für einen Bodenbelag.

### Weg zur Ausführung der Erfindung

Verbindungsnamen, die mit "Poly" beginnen, bezeichnen Substanzen, die pro Molekül formal zwei oder mehr der funktionellen Gruppen enthalten, die in ihren Namen auftreten. Die Verbindung kann monomer, oligomer oder polymer sein. Ein Polyamin ist z.B. eine Verbindung mit zwei oder mehr Aminogruppen. Ein Polyepoxid ist eine Verbindung mit zwei oder mehr Epoxygruppen.

Epoxidharze sind Polyepoxide, d.h. Verbindungen mit zwei oder mehr Epoxidgruppen. Epoxidharze sind bevorzugt oligomere oder polymere Verbindungen. Epoxidharze werden manchmal auch in Verbindung mit sogenannten Reaktivverdünnern eingesetzt. Reaktivverdünner sind Mono- oder Polyepoxide. Die Reaktivverdünner besitzen eine geringere Viskosität als das eingesetzte Epoxidharz und dienen dazu, die Viskosität des eingesetzten Epoxidharzes zu verringern. Der optionale Reaktivverdünner wird ebenfalls in die organische Bindemittelmatrix eingebaut und wird daher hier für die Bestimmung des Epoxidharzgewichts den Epoxidharzen zugerechnet.

Das Epoxid-Equivalentgewicht (EEW) kann gemäß DIN 53188 bestimmt werden und wird in g/Eq. angegeben.

Bei der Zusammensetzung der Erfindung handelt es sich um eine mehrkomponentige Zusammensetzung, d.h. die Zusammensetzung umfasst mehrere, insbesondere drei oder mehr individuelle Komponenten, die erst bei Gebrauch miteinander gemischt werden. Die Komponenten werden vor Gebrauch gesondert gelagert, um spontane Reaktion zu vermeiden. Für den Gebrauch werden die Komponenten miteinander gemischt. Nach der Vermischung beginnen anorganische Hydratations- und organische Vernetzungsreaktionen, die schließlich zur Härtung der Mischung führen.

Die erfindungsgemäße Zusammensetzung umfasst eine Binderkomponente (A), eine Härterkomponente (B) und eine feste Komponente (C). Es kann sich um eine dreikomponentige Zusammensetzung handeln, die nur aus diesen drei Komponenten besteht, was auch bevorzugt ist. Die Zusammensetzung kann aber nach Bedarf auch eine oder mehrere weitere zusätzliche Komponenten umfassen.

Es ist bevorzugt, dass die Binderkomponente (A) und/oder die Härterkomponente (B) Wasser enthalten, wobei die in den Komponenten (A) und/oder (B) enthaltene Wassermenge vorzugsweise zur Härtung des hydraulischen anorganischen Bindemittels, die in der Komponente (C) enthalten ist, ausreicht. Besonders bevorzugt enthalten die Binderkomponente (A) und die Härterkomponente (B) Wasser, wobei die in den Komponenten (A) und (B) enthaltene Wassermenge vorzugsweise zur Härtung des hydraulischen anorganischen Bindemittels ausreicht.

Es ist klar, dass der Anteil eines bestimmten Inhaltsstoffs in der Mischung der Komponenten von dem Anteil dieses Inhaltsstoffs in der betreffenden Komponente und dem Mischungsverhältnis der Komponenten abhängt. Anteile bzw. Verhältnisse von bestimmten Inhaltsstoffen, die hier angegeben werden, beziehen sich, sofern nicht anders angegeben, auf die zweckmäßigen bzw. geeigneten Gewichtsanteile bzw. Gewichtsverhältnisse der Inhaltsstoffe in der Mischung der Komponenten der mehrkomponentigen Zusammensetzung. Diese wird z.B. durch Mischen der Komponenten in geeigneten Mischungsverhältnissen gemäß Gebrauchsanweisung erhalten.

Die Binderkomponente (A) umfasst mindestens ein Epoxidharz und gegebenenfalls einen Reaktivverdünner. Die Binderkomponente (A) ist vorzugsweise eine flüssige Komponente. Sie kann viskos sein, ist aber im Allgemeinen gießfähig.

Es kann ein Epoxidharz oder eine Mischung von zwei oder mehr Epoxidharzen eingesetzt werden. Als Epoxidharz können alle in der Epoxychemie üblichen Epoxidharze eingesetzt werden. Epoxidharze können z.B. auf bekannte Art und Weise aus der Oxidation von den entsprechenden Olefinen oder aus der Reaktion von Epichlorhydrin mit den entsprechenden Polyolen oder Polyphenolen hergestellt werden.

Epoxidharze können in Epoxid-Flüssigharze und Epoxid-Festharze unterteilt werden. Das Epoxidharz kann z.B. ein Epoxy-Equivalentgewicht von 156 bis 500 g/Eq. aufweisen. Das Epoxidharz ist vorzugsweise ein Diepoxid. Das Epoxidharz ist vorzugsweise ein Flüssigharz.

In einer Ausführungsform kann das Epoxidharz ein aromatisches Epoxidharz sein. Dafür geeignet sind beispielsweise Epoxid-Flüssigharze der Formel (I), 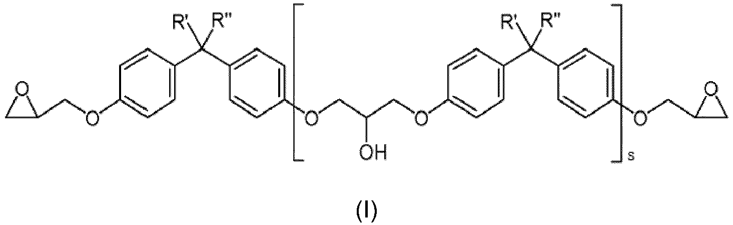 wobei R' und R" unabhängig voneinander jeweils für ein Wasserstoffatom oder für eine Methylgruppe stehen, und s im Mittel für einen Wert von 0 bis kleiner 2 und bevorzugt 0 bis 1 steht. Bevorzugt sind solche Flüssigharze der Formel (I), bei denen der Index s im Mittel für einen Wert von kleiner als 0,2 steht.

Bei den Epoxidharzen der Formel (I) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Solche Epoxid-Flüssigharze sind kommerziell erhältlich, z.B. unter den Bezeichnungen Araldite^{®} von Huntsman, D.E.R.^{®} von Dow, Epikote^{®} von Momentive, Epalloy^{®} von CVC, Chem Res^{®} von Cognis oder Beckopox^{®} von Cytec.

Weitere geeignete aromatische Epoxidharze sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynapht-1-yl)-methan, Bis-(4-hydroxynapht-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylenbis-(1-methyl-ethyliden)]-bisanilin (Bisanilin-M).

In einer weiteren Ausführungsform kann es sich beim Epoxidharz um ein aliphatisches oder cycloaliphatisches Epoxidharz handeln, wie z.B.
- Diglycidylether;
- ein Glycidylether eines gesättigten oder ungesättigten, verzweigten oder unverzweigten, zyklischen oder offenkettigen C₂- bis C₃₀-Diols, wie z.B. Ethylenglykol, Propylenglykol, Butylenglykol, Hexandiol, Octandiol, ein Polypropylenglykol, Dimethylolcyclohexan, Neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Weitere Beispiele für einsetzbare Epoxidharze sind Epoxidharze, die aus der Oxidation von Olefinen hergestellt wurden, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere Beispiele für einsetzbare Epoxidharze sind ein Bisphenol-A-, -F- oder - A/F-Festharz, die aufgebaut sind, wie die vorstehend genannten Epoxid-Flüssigharze der Formel (I), außer dass der Index s einen Wert von 2 bis 12 aufweist. Weitere Beispiele sind alle vorstehend genannten Epoxidharze, die durch die Umsetzung mit mindestens einem Polyoxyalkylenpolyol hydrophil modifiziert sind.

Als Epoxidharz bevorzugt sind Flüssigharze, insbesondere Diepoxide, auf der Basis eines Bisphenols, insbesondere auf der Basis von Bisphenol-A, Bisphenol-F oder Bisphenol-A/F, besonders bevorzugt Bisphenol-F- und/oder Bisphenol-A-Epichlorhydrinharz, wie sie kommerziell beispielsweise von Dow, Huntsman und Hexion erhältlich sind. Diese Flüssigharze weisen eine für Epoxidharze niedrige Viskosität und im ausgehärteten Zustand gute Eigenschaften als Beschichtungen auf. Sie können gegebenenfalls in Kombination mit Bisphenol A-Festharz oder Bisphenol-F-Novolak-Epoxidharz verwendet werden.

Die Binderkomponente (A) kann gegebenenfalls einen sogenannten Reaktivverdünner enthalten. Dies wird, wie gesagt, für das Epoxidharzgewicht dem Epoxidharz zugerechnet. Es können ein oder mehrere Reaktivverdünner eingesetzt werden. Als Reaktivverdünner geeignet sind Mono- und Polyepoxide. Die Zugabe eines Reaktivverdünners zum Epoxidharz bewirkt eine Reduktion der Viskosität, sowie im ausgehärteten Zustand der Epoxidharz-Zusammensetzung eine Reduktion der Glasübergangstemperatur und der mechanischen Werte.

Beispiele für Reaktivverdünner sind Glycidylether von ein- oder mehrwertigen Phenolen und aliphatischen oder cycloaliphatischen Alkoholen, wie insbesondere die bereits als aliphatische oder cycloaliphatische Epoxidharze genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether, C₁₂- bis C₁₄-Alkylglycidylether oder C₁₃- bis C₁₅-Alkylglycidylether, kommerziell erhältlich als Erisys^{®} GE-7, Erisys^{®} GE-8 (von CVC) oder als Epilox^{®} P 13 - 19 (von Leuna).

In einer bevorzugten Ausführungsform handelt es sich bei der Binderkomponente (A) um eine wässrige Binderkomponente (A), d.h. sie enthält Wasser. Die Binderkomponente (A) enthält bevorzugt eine wässrige Epoxidharz-Dispersion, wobei es sich um eine Epoxidharz-Emulsion, ein sogenanntes "emulgierbares Epoxidharz", oder eine Epoxidharz-Suspension handeln kann.

Eine Epoxidharz-Dispersion enthält bevorzugt neben Wasser mindestens ein Epoxidharz, wie es vorgängig genannt wurde, und weiterhin mindestens einen Emulgator, insbesondere einen nichtionischen Emulgator. Epoxidharz-Dispersionen oder -Emulsionen können z.B. einen Festkörpergehalt im Bereich von 40 - 70 Gew.% aufweisen.

Handelsübliche Epoxidharz-Dispersionen sind beispielsweise Sika^{®} Repair / Sikafloor^{®} EpoCem^{®} Modul A (von Sika Schweiz AG), Araldite^{®} PZ 323, Araldite^{®} PZ 756/67, Araldite^{®} PZ 3961 (von Huntsman), XZ 92598.00, XZ 92546.00, XZ 92533.00 (von Dow), Waterpoxy^{®} 1422, Waterpoxy^{®} 1455 (von Cognis), Beckopox^{®} EP 384w, Beckopox^{®} EP 385w, Beckopox^{®} EP 386w, Beckopox^{®} EP 2340w, Beckopox^{®} VEP 2381w (von Cytec).

Ein emulgierbares Epoxidharz enthält bevorzugt mindestens einen Emulgator, wie er bereits oben als Bestandteil einer Epoxidharz-Dispersion erwähnt wurde. Handelsübliche emulgierbare Epoxidharze sind beispielsweise Araldite^{®} PY 340 und Araldite^{®} PY 340-2 (von Huntsman), Beckopox^{®} 122w und Beckopox^{®} EP 147w (von Cytec).

Im Rahmen der vorliegenden Erfindung ist es bevorzugt, wenn die Binderkomponente (A) wässrig ist, wobei das Verhältnis von Epoxidharz, einschließlich gegebenenfalls eingesetztem Reaktivverdünner, zu Wasser vorzugsweise im Bereich von 3:1 bis 1:1 liegt. Das Epoxidharz ist bevorzugt in Wasser emulgierbar.

Die Binderkomponente (A) kann gegebenenfalls ein oder mehrere weitere Additive enthalten. Geeignete Additive werden weiter unten erläutert.

Die Härterkomponente (B) umfasst mindestens eine Aminverbindung als Aminhärter. Die Härterkomponente (B) ist vorzugsweise eine wässrige Härterkomponente (B), d.h. sie enthält Wasser. Die wässrige Härterkomponente (B) ist vorzugsweise eine flüssige Komponente. Sie kann viskos sein, ist aber im Allgemeinen gießfähig.

Bei der Aminverbindung als Aminhärter kann es sich um jede Aminverbindung handeln, die üblicherweise in der Technik als Härter für Epoxidharze eingesetzt werden. Solche Härter sind im Handel erhältlich. Es können eine Aminverbindung oder zwei oder mehr Aminverbindungen eingesetzt werden. Prinzipiell geeignet als Aminverbindungen sind Monoamine, sofern es sich um ein primäres Amin handelt, Verbindungen mit mindestens zwei Aminogruppen sind aber bevorzugter. Bei den Aminogruppen kann es sich um primäre und/oder sekundäre Aminogruppen handeln.

Bevorzugte Aminverbindungen als Aminhärter sind Polyamine, was auch Polyaminoamide und Addukte mit Polyepoxiden einschließt. Beispiele für geeignete Aminverbindungen als Aminhärter sind somit ein Polyamin, ein Polyaminoamid, ein Polyamin-Polyepoxid-Addukt oder ein Polyaminoamid-Polyepoxid-Addukt und Mischungen davon, die jeweils bevorzugt mindestens zwei Aminogruppen enthalten. Geeignete Polyamine sind aliphatische, cycloaliphatische, heterocyclische und aromatische Polyamine. Vorzugsweise handelt es sich bei dem als Aminhärter verwendeten Polyamin um ein wasserlösliches oder in Wasser dispergierbares Polyamin einschließlich entsprechenden Polyaminoamiden und Addukten mit Polyepoxiden.

Als Polyamin besonders geeignet sind insbesondere die folgenden Polyamine:
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Di-amino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)methan (H12-MDA), Bis-(4-amino-3-methylcyclohexyl)methan, Bis-(4-amino-3-ethylcyclohexyl)methan, Bis-(4-amino-3,5-dimethylcyclohexyl)-methan, Bis-(4-amino-3-ethyl-5-methylcyclohexyl)methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)bicyclo-[2.2.1]heptan (NBDA), 3(4), 8(9)-Bis-(aminomethyl)tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5,5]undecan sowie 1,3- und 1,4-Bis-(aminomethyl)-benzol;
- aliphatische, cycloaliphatische oder arylaliphatische primäre Triamine wie 4-Aminomethyl-1,8-octandiamin, 1,3,5-Tris-(aminomethyl)benzol, 1,3,5-Tris-(aminomethyl)cyclohexan, Tris-(2-aminoethyl)amin, Tris-(2-amino-propyl)-amin und Tris-(3-aminopropyl)amin;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis-(3-aminopropyl)polytetrahydrofurane und andere Polytetrahydrofuran-diamine, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramine D 230, Polyetheramine D 400 und Polyetheramine D 2000, PC Amine^{®} DA 250, PC Amine^{®} DA 400, PC Amine^{®} DA 650 und PC Amine^{®} DA 2000;
- primäre Polyoxyalkylen-Triamine, welche typischerweise Produkte aus der Aminierung von Polyoxyalkylen-Triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil), wie insbesondere Jeffamine^{®} T-403, Jeffamine^{®} T-3000, Jeffamine^{®} T-5000, Polyetheramine T 403, Polyetheramine T 5000 und PC Amine^{®} TA 403;
- tertiäre Aminogruppen aufweisende Polyamine mit zwei primären aliphatischen Aminogruppen, wie insbesondere N,N'-Bis-(aminopropyl)-piperazin, N,N-Bis-(3-aminopropyl)methylamin, N,N-Bis-(3-aminopropyl)ethylamin, N,N-Bis-(3-aminopropyl)propylamin, N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)dodecylamin und N,N-Bis-(3-aminopropyl)talgalkylamin, erhältlich als Triameen^{®} Y12D und Triameen^{®} YT (von Akzo Nobel);
- tertiäre Aminogruppen aufweisende Polyamine mit drei primären aliphatischen Aminogruppen, wie insbesondere Tris-(2-aminoethyl)amin, Tris-(2-aminopropyl)amin und Tris-(3-aminopropyl)amin;
- sekundäre Aminogruppen aufweisende Polyamine mit zwei primären aliphatischen Aminogruppen, wie insbesondere 3-(2-Aminoethyl)amino-propylamin, Bis-hexamethylentriamin (BHMT), Diethylentriamin (DETA), Triethylentetramin (TETA), Tetraethylenpentamin (TEPA), Pentaethylen-hexamin (PEHA) und höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis-(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin und N,N'-Bis-(3-amino-1-ethylpropyl)-2-methyl-1,5-pentandiamin;
- eine primäre und eine sekundäre Aminogruppe aufweisende Polyamine, wie insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie N-Cocoalkyl-1,3-propandiamin und Produkte aus der Michael-artigen Additionsreaktion von primären aliphatischen Diaminen mit Acrylnitril, Malein- oder Fumarsäurediestern, Citraconsäurediestern, Acryl-und Methacrylsäure-estern, Acryl- und Methacrylsäureamiden und Itaconsäurediestern, umgesetzt im Molverhältnis 1:1, weiterhin Produkte aus der partiellen reduktiven Alkylierung von primären aliphatischen Polyaminen mit Benzaldehyd oder ändern Aldehyden oder Ketonen, sowie partiell styrolisierte Polyamine wie Gaskamine^{®} 240 (von Mitsubishi Gas Chemical (MGC));
- aromatische Polyamine, wie insbesondere m- und p-Phenylendiamin, 4,4'-, 2,4' und 2,2'-Diaminodiphenylmethan, 3,3'-Dichloro-4,4'-diaminodiphenylmethan (MOCA), 2,4- und 2,6-Toluylendiamin, Mischungen von 3,5-Di-methylthio-2,4- und -2,6-toluylendiamin (erhältlich als Ethacure^{®} 300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis-(4-aminobenzoat), 1,4-Butylen-bis-(4-aminobenzoat), Polytetramethylenoxid-bis-(4-aminobenzoat) (erhältlich als Versalink^{®} von Air Products), 1,2-Bis-(2-aminophenylthio)ethan, 2-Methylpropyl-(4-chloro-3,5-diaminobenzoat) und tert.Butyl-(4-chloro-3,5-diaminobenzoat);
- Addukte der genannten Polyamine mit Epoxiden und Epoxidharzen, insbesondere Addukte mit Diepoxiden im Molverhältnis von mindestens 2/1, Addukte mit Monoepoxiden im Molverhältnis von mindestens 1/1, sowie Umsetzungsprodukte aus Aminen und Epichlorhydrin, insbesondere jenes von 1,3-Bis-(aminomethyl)benzol, kommerziell erhältlich als Gaskamine^{®} 328 (von MGC);
- Polyamidoamine, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder TETA, darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®} 3607 und 530 (von Huntsman) und Beckopox^{®} EH 651, EH 654, EH 655, EH 661 und EH 663 (von Cytec); und
- Phenalkamine, auch Mannich-Basen genannt, welche Umsetzungsprodukte einer Mannich-Reaktion von Phenolen, insbesondere Cardanol, mit Aldehyden, insbesondere Formaldehyd, und Polyaminen darstellen, insbesondere die kommerziell erhältlichen Phenalkamine Cardolite^{®} NC-541, NC-557, NC-558, NC-566, Lite 2001 und Lite 2002 (von Cardolite), Aradur^{®} 3440, 3441, 3442 und 3460 (von Huntsman) und Beckopox^{®} EH 614, EH 621, EH 624, EH 628 und EH 629 (von Cytec).

Bevorzugt als Polyamin sind Polyamine ausgewählt aus der Gruppe bestehend aus 1,3-Pentandiamin (DAMP), 1,5-Diamino-2-methylpentan (MPMD), 2-Butyl-2-ethyl-1,5-pentandiamin (C11-Neodiamin), 1,6-Hexandiamin, 2,2,4- und 2,4,4-Trimethylhexamethylendiamin (TMD), 1,12-Dodecandiamin, 1,3-Diaminocyclohexan, Bis-(4-aminocyclohexyl)methan (H12-MDA), Bis-(4-amino-3-methylcyclohexyl)methan, 1-Amino-3-aminomethyl-3,5,5-trimethylcyclohexan (IPDA), 1,3-Bis-(aminomethyl)cyclohexan, 1,3-Bis-(aminomethyl)benzol (MXDA), Bis-hexamethylentriamin (BHMT), Diethylentriamin (DETA), Triethylentetramin (TETA), Tetraethylenpentamin (TEPA), Pentaethylen-hexamin (PEHA) und höhere Homologe linearer Polyethylenamine wie Polyethylenpolyamin mit 5 bis 7 Ethylenamin-Einheiten (HEPA), Dipropylen-triamin (DPTA), N-(2-Aminoethyl)-1,3-propandiamin (N3-Amin), N,N'-Bis(3-aminopropyl)ethylendiamin (N4-Amin), Polyoxyalkylen-Diamine und Polyoxyalkylen-Triamine mit einem Molekulargewicht im Bereich von 200 bis 500 g/mol, insbesondere die Typen Jeffamine^{®} D-230, Jeffamine^{®} D-400 und Jeffamine^{®} T-403, Polyanilidoamine, Phenalkamine, an primären Aminogruppen vollständig oder teilweise alkylierte Verbindungen der genannten Polyamine und Addukte der genannten Polyamine mit Epoxiden und Epoxidharzen. Diese bevorzugten Polyamine sind besonders gut verträglich mit Epoxidharzen.

In Zusammenhang mit der vorliegenden Erfindung ganz besonders bevorzugte Polyamine sind aliphatische Polyamine. Ein speziell bevorzugtes Amin ist 1-Amino-3-aminomethyl-3,5,5-trimethylcyclohexan allein oder in Mischung mit 2,2'-Dimethyl-4,4'-methylen(cyclohexanamin).

Im Rahmen der vorliegenden Erfindung kann die Härterkomponente (B) ausschließlich aus den genannten Aminen bestehen. Es ist jedoch wie gesagt bevorzugt, dass die Härterkomponente (B) Wasser enthält. Gegebenenfalls können ein oder mehrere Additive, wie insbesondere Entschäumer, in der Härterkomponente (B) enthalten sein. Weitere geeignete optionale Additive für die Härterkomponente (B) werden weiter unten erläutert.

Es ist bevorzugt, wenn die Härterkomponente (B) 1 bis 25 Gew.-%, insbesondere 2 bis 20 Gew.-% der mindestens einen Aminverbindung als Aminhärter, enthält. Der zu 100 Gew.-% fehlende Anteil besteht in diesem Fall vorzugsweise aus Wasser und gegebenenfalls einem oder mehreren Additiven, wie Entschäumer.

Bevorzugt werden als Komponente (B) wässrige Aminhärter verwendet, die für selbstverlaufende Beschichtungssysteme eingesetzt werden. Beispiele für geeignete Handelsprodukte sind Epilink^{®}701 von AirProducts, Incorez^{®}148/700 von Incorez und D.E.H.^{®} 804 von Dow Chemical Co.

Weitere optionale Additive, die in der Binderkomponente (A) und/oder in der Härterkomponente (B), enthalten sein können, sind auf diesem Gebiet üblicherweise eingesetzte Additive, wie z.B. nicht-reaktive Verdünner, Lösemittel oder Filmbildehilfsmittel; Reaktivverdünner und Extender, z.B. Epoxidgruppen-haltige Reaktivverdünner, wie sie bereits erwähnt wurden; Polymere, thermoplastische Polymere; anorganische und organische Füllstoffe, wie z.B. gemahlene oder gefällte Calciumcarbonate, Baryt, Talke, Quarzmehle, Quarzsand, Dolomite, Wollastonite, Kaoline, Glimmer, Aluminiumoxide, Aluminiumhydroxide, Kieselsäuren, PVC-Pulver oder Hohlkugeln; Fasern; Beschleuniger, welche die Reaktion zwischen Aminogruppen und Epoxidgruppen beschleunigen, z.B. Säuren oder zu Säuren hydrolysierbare Verbindungen; tertiäre Amine und Salze davon; quaternäre Ammoniumsalze; Rheologiemodifizierer, wie z.B. Verdickungsmittel; Haftvermittler, wie z.B. Organoalkoxysilane; Stabilisatoren gegen Wärme, Licht oder UV-Strahlung; flammhemmende Substanzen; oberflächenaktive Substanzen, wie z.B. Netzmittel, Verlaufsmittel, Entlüftungsmittel oder Entschäumer; und Biozide.

Die Komponente (C) ist eine feste Komponente und vorzugsweise pulverförmig. Die feste Komponente (C) umfasst ein hydraulisches anorganisches Bindemittel. Hydraulische anorganische Bindemittel sind anorganische bzw. mineralische Bindemittel, die mit Wasser auch unter Wasser erhärtbar sind.

Das hydraulische anorganische Bindemittel ist ein ternäres Bindemittel aus Tonerdezement, Calciumsulfat und Portlandzement. Solche ternären Bindemittel sind bekannt und weisen kurze Abbindezeiten und hohe Frühfestigkeiten auf.

Es können ein oder mehrere Tonerdezemente verwendet werden. Tonerdezemente sind Calciumaluminatzemente. Sie basieren in der Regel auf Kalkstein und Bauxit und können im Schmelzprozess oder im Sinterprozess hergestellt werden. Der nach dem Schmelzprozess hergestellte Tonerdezement wird auch als Tonerdeschmelzzement bezeichnet. In der DIN EN 14647 finden sich Angaben zu Zusammensetzung und Anforderungen an Tonerdezement.

Es können natürlich auch Tonerdezemente gemäß anderer Normen eingesetzt werden.

Das Calciumsulfat kann in Form des Anhydrits (CaSO₄), Dihydrats (CaSO₄ ·2H₂O), Hemihydrats (CaSO₄ ·0,5H₂O) oder einer Mischung davon verwendet werden, wobei das Hemihydrat bevorzugt ist. Das Hemihydrat wird auch als Halbhydrat bezeichnet.

Es können, sofern eingesetzt, ein oder mehrere Portlandzemente verwendet werden. Portlandzement ist der am häufigsten verwendete Zement. Weltweit existieren Normen und Standards, z.B. die europäische Norm DIN EN 197, in denen Zusammensetzung, Anforderungen und Konformitätskriterien beschrieben werden. Geeignet sind insbesondere Portlandzemente CEM I gemäß DIN EN 197, z.B. Portlandzement I-42,5 R oder I-52,5. Natürlich können aber auch Portlandzemente gemäß anderer ausländischer Normen, z.B. gemäß ASTM-Standard oder dem indischen Standard, eingesetzt werden.

Die feste Komponente (C) enthält 5 bis 20 Gew.-% Tonerdezement, 3 bis 13 Gew.-% Calciumsulfat, vorzugsweise das Hemihydrat, und 3 bis 10 Gew.-% Portlandzement. Die Menge an ternärem Bindemittel in der festen Komponente (C) kann nach Bedarf variieren, liegt aber vorzugweise im Bereich von 3 bis 40 Gew.-% und besonders bevorzugt 10 bis 35 Gew.-%. Die Mengenangaben beziehen sich jeweils auf das Gesamtgewicht der Komponente (C).

Die Verhältnisse zwischen Tonerdezement, Calciumsulfat und gegebenenfalls Portlandzement können verändert werden, um Abbindezeit, Frühfestigkeit, schnelles Abtrocknen und Schwindungskompensation auf die gewünschten Werte einzustellen.

Die feste Komponente (C) kann weitere anorganische bzw. mineralische Bindemittel enthalten, z.B. Magnesiabinder, das ist in der Regel aber nicht bevorzugt.

Die feste Komponente (C) enthält vorzugsweise mindestens einen Füllstoff, bevorzugt Sand und insbesondere Quarzsand. Füllstoffe sind chemisch inerte feste partikuläre Materialien und werden in verschiedenen Formen, Größen und als unterschiedliche Materialien angeboten, die von feinen Sandpartikeln bis großen groben Steinen variieren. Beispiele für geeignete Füllstoffe sind Sand, Kies, zerkleinerte Steine, Schlacke, calcinierte Kiesel, Ton, Bimsstein, Perlit, Vermiculit, Aluminiumoxid, Calciumcarbonat, Fasern, insbesondere Polymerfasern, und amorphe Kieselsäure (fumed silica). Vorzugsweise umfasst der Füllstoff Sand, insbesondere Quarzsand, da sich damit die Verarbeitbarkeit der Zusammensetzung vorteilhaft einstellen und eine ebene Oberfläche sicherstellen lässt.

Die Partikelgröße der Füllstoffe ist vorzugsweise relativ klein, d.h., weniger als 5 mm. Die Füllstoffe können beispielsweise eine Partikelgröße im Bereich von 0,05 mm bis 2,5 mm aufweisen, wobei Sand, insbesondere Quarzsand, besonders bevorzugt ist. Beispielsweise ist die Verwendung von Sand mit einer Partikelgröße im Bereich von 0,05 bis 0,3 mm, 0,1 bis 0,6 mm, 0,3 bis 0,9 mm, 0,7 mm bis 1,2 mm und 1,5 bis 2,2 mm oder eines Gemisch davon mit Vorteilen verbunden. Die Partikelgröße kann mit Hilfe einer Siebanalyse bestimmt werden.

Der Füllstoffgehalt in der festen Komponente kann in breiten Bereichen variieren, beträgt aber bevorzugt mindestens 36 Gew.-%, bevorzugter mindestens 50 Gew.-% und vorzugsweise mindestens 57 Gew.-%, wobei bevorzugt nicht mehr als 90 Gew.-% und besonders bevorzugt nicht mehr als 89 oder nicht mehr als 85 Gew.-% Füllstoffe enthalten sind.

Die feste Komponente (C) enthält bevorzugt 5 bis 20 Gew.-% Tonerdezement, 3 bis 13 Gew.-% Calciumsulfat, 3 bis 10 Gew.-% Portlandzement und 57 bis 89 Gew.-% Füllstoffe. Die Mengenangaben beziehen sich jeweils auf das Gesamtgewicht der Komponente (C).

Die feste Komponente kann gegebenenfalls ein oder mehrere weitere Additive enthalten, die dem Fachmann in der Mörtel- und Betontechnologie ohne weiteres geläufig sind. Beispiele sind Mittel zur Reduktion der Schwindung, wie z.B. Calciumsulfoaluminate und/oder Neopentylglycol, Verflüssiger, Verdicker, Thixotropiermittel, Emulgatoren, Fließmittel, Luftporenbildner, Wasserretentionsmittel, Hydrophobierungsmittel, Stellmittel, Beschleuniger und/oder Verzögerer, die der Fachmann abhängig von den beabsichtigten Anwendungseigenschaften zusetzen kann.

Der Anteil der Additive in der festen Komponente (C), bezogen auf das Gesamtgewicht der Komponente (C), sollte vorzugsweise 10 Gew.-% nicht übersteigen. Besonders bevorzugt sollte die Gesamtmenge der Additive 5 Gew.-% oder weniger, insbesondere 3 Gew.-% oder weniger betragen.

In einer Ausführungsform kann die erfindungsgemäße mehrkomponentige Zusammensetzung gegebenenfalls ein bei 23°C festes polymeres Bindemittel enthalten. Durch das feste polymere Bindemittel können Eigenschaften wie z.B. Druckfestigkeit und Schwund, weiter verbessert werden. Bei dem festen polymeren Bindemittel handelt es sich vorzugsweise um ein Bindemittel auf Basis eines in Wasser dispergierbaren Pulvers. Das polymere Bindemittel kann zusätzlich geringe Mengen eines Emulgators, wie Polyvinylalkohol, enthalten. Die Partikelgröße des festen polymeren Bindemittels liegt vorzugsweise im Bereich von 0,1 bis 50 µm, besonders bevorzugt im Bereich von 1 bis 15 µm.

Das bei 23°C feste polymere Bindemittel ist bevorzugt ein Ethylen-Vinylacetat-Copolymer, das gegebenenfalls ein oder mehrere weitere Comonomere enthalten kann. Das bei 23°C feste polymere Bindemittel ist, falls eingesetzt, bevorzugt mit einem Gehalt von 0,1 bis 10 Gew.-%, bevorzugter 0,25 bis 3 Gew.-%, bezogen auf das Gesamtgewicht der mehrkomponentigen Zusammensetzung, in der mehrkomponentigen Zusammensetzung enthalten. Solche festen polymeren Bindemittel sind im Handel erhältlich, z.B. die Vinnapas^{®}-Produkte von Wacker AG.

Das bei 23°C feste polymere Bindemittel kann in der festen Komponente (C) und/oder in einer zusätzlichen Komponente enthalten sein. Gegebenenfalls kann das feste polymere Bindemittel aber auch in der Binderkomponente (A) oder der Härterkomponente (B) enthalten sein.

Wie bereits erläutert, kann die mehrkomponentige Zusammensetzung neben den drei genannten Komponenten nach Bedarf weitere zusätzliche Komponenten umfassen, was aber nicht bevorzugt ist. Beispiele für solche optionalen zusätzlichen Komponenten sind Komponenten, die z.B. Wasser, Füllstoffe, Pigmente, feste polymere Bindemittel sind oder enthalten. Das Wasser, das zur Härtung des ternären Bindemittels benötigt wird, kann z.B. ganz oder teilweise als eigene Komponente vorliegen, die erst bei Mischung der Komponenten vor Gebrauch zugegeben wird, um die gewünschte Wassermenge einzustellen. Vorzugsweise ist aber die notwendige Wassermenge bereits in der Komponente (A) und/oder der Komponente (B) enthalten.

Die Gesamtmenge an Epoxidharz, einschließlich gegebenenfalls eingesetztem Reaktivverdünner, und Aminhärter in der mehrkomponentigen Zusammensetzung, kann in breiten Bereichen variieren, beträgt aber nicht mehr als 2 Gew.-%, bezogen auf das Gesamtgewicht der mehrkomponentigen Zusammensetzung. Die Gesamtmenge an Epoxidharz, einschließlich gegebenenfalls eingesetztem Reaktivverdünner, und Aminhärter in der mehrkomponentigen Zusammensetzung, ist bevorzugt mindestens 0,1 Gew.-% und bevorzugter mindestens 0,5 Gew.-%, bezogen auf das Gesamtgewicht der mehrkomponentigen Zusammensetzung.

Das Mischungsverhältnis zwischen der Binderkomponente (A) und der Härter-komponente (B) kann in breiten Bereichen variieren. Es wird bevorzugt so gewählt, dass in der mehrkomponentigen Zusammensetzung das stöchiometrische Verhältnis von Aminfunktionalität zu Epoxidfunktionalität im Bereich von 1,1 : 1 bis 0,9 : 1 liegen sollte. Vorzugsweise beträgt das Verhältnis etwa 1 : 1.

Es ist weiterhin bevorzugt, dass die feste Komponente (C) den Hauptteil der mehrkomponentigen Zusammensetzung ausmacht, z.B. etwa 70 bis etwa 95 Gew.-%, vorzugsweise etwa 75 bis etwa 90 Gew.-% der mehrkomponentigen Zusammensetzung.

Die Erfindung betrifft auch ein Verfahren zum Beschichten, Verbinden, Abdichten oder Verfugen von Bauteilen mit einer erfindungsgemäßen mehrkomponentigen Zusammensetzung wie vorstehend beschrieben, wobei das Verfahren folgende Verfahrensschritte umfasst
a) Mischen der Binderkomponente (A) und der Härterkomponente (B),
b) Zugabe der festen Komponente (C) zu der in Schritt a) erhaltenen Mischung unter Rühren, um eine Bindermischung zu erhalten,
c) Verarbeiten der erhaltenen Bindermischung durch
   c1) Aufbringen der Bindermischung auf die Oberfläche eines oder mehrerer Bauteile zur Beschichtung,
   c2) Aufbringen der Bindermischung auf die Oberfläche eines oder mehrerer Bauteile und Aufsetzen eines oder mehrerer weiterer Bauteile auf die aufgetragene Bindermischung zum Verbinden der Bauteile oder
   c3) Einbringen der Bindermischung in den Zwischenraum zwischen zwei oder mehr Bauteilen zum Abdichten oder Verfugen,
d) gegebenenfalls Glätten und/oder Entlüften der auf- bzw. eingebrachten Bindermischung und
e) Aushärten der Bindermischung,
wobei Wasser in der Binderkomponente (A) und/oder der Härterkomponente (B) enthalten ist und/oder als gesonderte Komponente vor oder während der Zugabe der festen Komponente (C) zugegeben wird.

Wie erläutert, kann die mehrkomponentige Zusammensetzung auch ein oder mehrere zusätzliche Komponenten umfassen. Die Art und Reihenfolge der Zugabe der zusätzlichen Komponenten zur Mischung der Zusammensetzung ist beliebig, vorzugsweise werden aber eine oder mehrere zusätzliche flüssige Komponenten, sofern eingesetzt, in Schritt a) zugemischt. Eine oder mehrere zusätzliche feste Komponenten, sofern eingesetzt, werden bevorzugt in Schritt b) zugemischt.

Das Verarbeitung der Bindermischung und die Aushärtung kann z.B. bei Temperaturen im Bereich von 5 bis 35°C erfolgen.

Bei dem Bauteil zur Beschichtung kann es sich um ein Substrat aus einem beliebigen Material handeln, insbesondere die für den Bau üblichen Materialen, wie z.B. Beton, Steine, Mauerwerk, Verputz, Holz, Glas oder Metall.

Bei dem Bauteil handelt es sich vorzugsweise um einen Boden, z.B. aus Beton, Mörtel, Estrich oder Steinen, wobei die Beschichtung aus der erfindungsgemäßen Zusammensetzung einen Bodenbelag bildet. Besonders bevorzugt handelt es sich um einen selbstverlaufenden Bodenbelag. Der Boden kann mit einer Grundierung versehen sein. Ferner ist es möglich, auf die aufgebrachte gehärtete Bindermischung eine Deckschicht als Versiegelung aufzubringen.

Zum Verbinden, Abdichten oder Verfugen von Bauteilen kann die erfindungsgemäße mehrkomponentige Zusammensetzung in üblicher Weise, z.B. als Mörtel oder Reparaturmörtel, verwendet werden.

Mit dem Mischen der mehrkomponentigen Zusammensetzung beginnt die Aushärtungsreaktion. Die Epoxygruppen des Epoxidharzes und gegebenenfalls des Reaktivverdünners reagieren mit den Amingruppen unter Bildung der organischen Bindemittelmatrix, während das hydraulische anorganische Bindemittel mit dem Wasser unter Hydratationsreaktionen die anorganische Bindemittelmatrix bildet, wodurch die Zusammensetzung schließlich aushärtet. Somit beschreibt die vorliegende Erfindung auch Produkte, die eine ausgehärtete erfindungsgemäße Zusammensetzung umfassen, erhältlich nach dem vorstehend beschriebenen Verfahren.

Die Erfindung betrifft auch die Verwendung der erfindungsgemäßen mehrkomponentigen Zusammensetzung als Estriche, Mauer, Putz, Mörtel und Reparaturmörtel, bevorzugt als Beschichtungszusammensetzung, insbesondere als selbstverlaufende Bodenausgleichsmasse für einen Bodenbelag, oder als Mörtel.

Es folgen Beispiele zur Erläuterung der Erfindung, die den Umfang der Erfindung aber in keiner Weise beschränken sollen.

### Beispiele

Für die Herstellung der Zusammensetzungen wurden folgende Komponenten verwendet.

### Binderkomponente A

Epoxidharz-Komponente als Emulsion aus etwa 62 Gew.-% eines Epoxidharzgemischs aus Diglycidylether von Bisphenol A/F und 38 Gew.-% Wasser.

### Härter-Komponente B1

Mischung aus 2,4 Gew.-% eines modifizierten Aminhärters auf Basis von 1-Amino-3-aminomethyl-3,5,5-trimethylcyclohexan, 0,1 Gew.-% eines Entschäumers und 97,5 Gew.-% Wasser.

### Härterkomponente B2

18 Gew.-% eines modifizierten Aminhärters auf Basis von 1-Amino-3-aminomethyl-3,5,5-trimethylcyclohexan, 0,75 Gew.-% eines Entschäumers und 81,25 Gew.-% Wasser. Die Härterkomponente B2 entspricht bezüglich der Bestandteile der Härterkomponte B1 ist aber hinsichtlich der Aminverbindung stärker konzentriert.

### Feste Komponente C

Es wurden zwei feste Komponenten C1 und C2 gemäß der in Tabelle 1 angegebenen Zusammensetzung hergestellt.

**Tabelle 1**

| Feste Komponente | C1 (Gew.-Teile) | C2 (Gew.-Teile) |
|---|---|---|
| Portlandzement I 42,5R | 33 | - |
| Portlandzement I 52,5R | - | 6 |
| Calciumsulfat¹⁾ | - | 8 |
| Tonerdezement²⁾ | - | 14 |
| Quarzsand³⁾ | 62 | 58 |
| Calciumcarbonat | 2 | 10 |
| Schwindungsreduktionsmittel⁴⁾ | 1 | 1 |
| weitere Additive⁵⁾ | 2 | 3 |

| | | |
|---|---|---|
| ¹⁾ Alpha Halbhydrat ²⁾ Ternal^{®} LC von Kerneos ³⁾ Partikelgrößen im Bereich von 0,06-0,6 mm ⁴⁾ auf Basis von Calciumsulfoaluminat und Neopentylglycol ⁵⁾ Fasern, Verdicker, amorphe Kieselsäure, Chromatreduzierer, Entschäumer, Beschleuniger und Verzögerer | | |

Binderkomponente A und Härterkomponente B wurde miteinander vermischt. Anschließend wurde eine feste Komponente C zugegeben um eine homogene Mischung zu erhalten. Bei Vergleichsbeispiel 2 und Beispiel 1 wurde mit der Zugabe der festen Komponente C zusätzlich Vinnapas^{®} 7220N von Wacker AG, ein in Wasser redispergierbares Ethylen-Vinylacetat-Copolymer, in einem Anteil von ca. 2,5 Gew.-%, bezogen auf das Gesamtgewicht der Mischung, zugegeben. Das Vinnapas^{®} kann genausogut direkt in entsprechender Menge in der Komponente C aufgenommen werden, so dass hier keine zusätzliche Komponente erforderlich ist. Von den so hergestellten Zusammensetzungen wurde die Verarbeitbarkeit, das Schwindungsverhalten, die Druckfestigkeit und Haftfestigkeit geprüft. Hierfür wurden mit den erhaltenen Mischungen Beschichtungen auf einem Betonsubstrat und Prüfkörper hergestellt.

Die Verarbeitbarkeit wurde bestimmt, indem die Zusammensetzung auf eine konventionelle Gehwegplatte aus Beton aufgetragen und dort verarbeitet wurde. Die Verarbeitbarkeit wurde durch den Verarbeiter als Wert auf einer Skala von 1 bis 4 festgelegt, auf der 1 den schlechtesten und 4 den besten Wert darstellt.

Das Schwindungsverhalten wurde gemäß der Norm EN 12617-4 an 4x4x16cm Prismen bestimmt. Vor der Messung wurden die Prismen für 28 Tage gehärtet.

Die Druckfestigkeit wurde gemäß der Norm EN 12190 an 4x4x16cm Prismen bestimmt. Vor der Messung wurden die Prismen für 28 Tage gehärtet.

Die Haftfestigkeit wurde gemäß der Norm EN 1542 auf einer sandgestrahlten Gartenplatte aus Beton bestimmt. Vor der Messung wurde die Zusammensetzung auf der Platte für 28 Tage gehärtet.

Der Oberflächenfeuchtigkeit einer auf Beton aufgebrachten Beschichtung aus der Zusammensetzung wurde mit einem Feuchtigkeitsmessgerät von Tramex bestimmt, bei dem der Feuchtegehalt mittels einer elektronischen Impedanzmessung ermittelt wird. Es wurden an der aufgebrachten Beschichtung in regelmäßigen Intervallen Messungen durchgeführt. Die Dauer von Auftrag der Beschichtung bis zum Erreichen eines Feuchtegehalts von 4% wurde bestimmt.

Die eingesetzten Komponenten, Mischverhältnisse und Ergebnisse sind in nachfolgender Tabelle 2 gezeigt.

**Tabelle 2**

| | Vergleichsbeispiel 1 | Vergleichsbeispiel 2 | Beispiel 1 |
|---|---|---|---|
| Komponente A | A | A | A |
| Komponente B | B2 | B1 | B1 |
| Komponente C | C1 | C1 | C2 |
| Mischverhältnis A:B:C (Gewicht) | 1:2,5:18,5 | 1:14:84 | 1:7:60 |
| Epoxidharz+Aminhärter, Gew.-%¹⁾ | ca. 4 | ca. 1 | ca. 1 |
| Verarbeitbarkeit | 1 | 4 | 2 |
| Druckfestigkeit, in MPa | 58 | 40,9 | 61,4 |
| Schwindung, in ‰ | -0,948 | -0,637 | -0,142 |
| Haftfestigkeit, in MPa | 3,9 | 2,1 | 2,77 |
| Oberflächenfeuchtigkeit (Dauer bis Feuchtegehalt von 4%) | 19 h | > 45 h | 2 h |

| | | | |
|---|---|---|---|
| ¹⁾ bezogen auf das Gesamtgewicht der Mischung | | | |

Übliche Anforderungen an solche Systeme sind eine Druckfestigkeit von mindestens 50 MPa, ein Schwund kleiner 0,6 mm/m, eine Haftfestigkeit von mindestens 2 MPa und ein Erreichen eines Feuchtegehalts von 4% innerhalb von 24 Stunden.

Aus der vorstehenden Tabelle ist ersichtlich, dass der Einsatz des ternären Bindemittels die Eigenschaften der erfindungsgemäßen mehrkomponentigen Zusammensetzung in Bezug auf die Schwindung, in Bezug auf Druckfestigkeit, Haftfestigkeit sowie in Bezug auf die Oberflächenfeuchtigkeit wesentlich verbessern kann. Die Oberflächenfeuchtigkeit wird innerhalb kurzer Zeit auf unter 4% reduziert, wodurch eine schnelle Überbeschichtbarkeit ermöglicht wird.

Die erfindungsgemäße mehrkomponentige Zusammensetzung weist sehr schnelle Abbindezeiten auf, wodurch sich relativ kurze Verarbeitungszeiten ergeben. Die Verarbeitungszeiten sind aber für viele Anwendungen ausreichend. Die Abbindezeit kann durch Variation der Anteile der Komponenten des ternären Bindemittels beeinflusst werden. Insgesamt ist die Verarbeitbarkeit des erfindungsgemäßen Beispiels 1 aber verglichen mit Vergleichsbeispiel 1, das einen üblichen organischen Bindemittelgehalt aufweist, deutlich besser und die Masse ist auch weniger klebrig und daher einfacher zu applizieren. Gegenüber Vergleichsbeispiel 1 ergibt sich auch ein deutlich verringerter Schwund.

Es zeigt sich demzufolge, dass durch Einsatz eines ternären Bindemittels wie definiert die Eigenschaften von mehrkomponentigen ECC-Systemen teilweise signifikant verbessert werden können.

## Patentansprüche

1. Mehrkomponentige Zusammensetzung, umfassend
A) eine Binderkomponente (A) umfassend mindestens ein Epoxidharz,
B) eine Härterkomponente (B) umfassend mindestens eine Aminverbindung als Aminhärter und
C) eine feste Komponente (C) umfassend ein hydraulisches anorganisches Bindemittel,
**dadurch gekennzeichnet, dass** das hydraulische anorganische Bindemittel ein ternäres Bindemittel aus Tonerdezement, Calciumsulfat und Portlandzement ist, wobei die feste Komponente (C) 5 bis 20 Gew.-% Tonerdezement, 3 bis 13 Gew.-% Calciumsulfat und 3 bis 10 Gew.-% Portlandzement enthält, und die Gesamtmenge an Epoxidharz und Aminhärter in der mehrkomponentigen Zusammensetzung, bezogen auf das Gesamtgewicht der mehrkomponentigen Zusammensetzung nicht mehr als 2 Gew.-% beträgt.

2. Mehrkomponentige Zusammensetzung nach Anspruch 1, **dadurch gekennzeichnet, dass** das Calciumsulfat ausgewählt ist aus dem Anhydrit, Dihydrat, Hemihydrat oder einer Mischung davon, wobei das Hemihydrat bevorzugt ist.

3. Mehrkomponentige Zusammensetzung nach irgendeinem der Ansprüche 1 bis 2, **dadurch gekennzeichnet, dass** die Binderkomponente (A) und/oder die Härterkomponente (B) Wasser enthalten.

4. Mehrkomponentige Zusammensetzung nach irgendeinem der Ansprüche 1 bis 3, **dadurch gekennzeichnet, dass** die feste Komponente (C) ein oder mehrere Füllstoffe, wobei mindestens ein Füllstoff bevorzugt Sand ist, und gegebenenfalls ein oder mehrere Additive umfasst, wobei der Füllstoffgehalt in der Komponente (C) vorzugsweise mindestens 36 Gew.-% und bevorzugter mindestens 57 Gew.-% beträgt.

5. Mehrkomponentige Zusammensetzung nach irgendeinem der Ansprüche 1 bis 4, **dadurch gekennzeichnet, dass** die Gesamtmenge an Epoxidharz und Aminhärter in der mehrkomponentigen Zusammensetzung, bezogen auf das Gesamtgewicht der mehrkomponentigen Zusammensetzung, nicht weniger als 0,1 Gew.-% beträgt.

6. Mehrkomponentige Zusammensetzung nach irgendeinem der Ansprüche 1 bis 5, **dadurch gekennzeichnet, dass** der Anteil des ternären Bindemittels in der festen Komponente (C) im Bereich von 3 bis 40 Gew.-% liegt.

7. Mehrkomponentige Zusammensetzung nach irgendeinem der Ansprüche 1 bis 6, **dadurch gekennzeichnet, dass** das mindestens eine Epoxidharz mindestens ein Epoxidharz und einen Reaktivverdünner umfasst.

8. Mehrkomponentige Zusammensetzung nach irgendeinem der Ansprüche 1 bis 7, **dadurch gekennzeichnet, dass** die mindestens eine Aminverbindung ein Polyamin, ein Polyaminoamid, ein Polyamin-Polyepoxid-Addukt, ein Polyaminoamid-Polyepoxid-Addukt oder eine Mischung von mindestens zwei dieser Verbindungen ist.

9. Mehrkomponentige Zusammensetzung nach irgendeinem der Ansprüche 1 bis 8, **dadurch gekennzeichnet, dass** die mehrkomponentige Zusammensetzung ein bei 23°C festes polymeres Bindemittel enthält, das bevorzugt ein Ethylen-Vinylacetat-Copolymer, das gegebenenfalls ein oder mehrere weitere Comonomere umfasst, ist.

10. Verfahren zum Beschichten, Verbinden, Abdichten oder Verfugen von Bauteilen mit einer mehrkomponentigen Zusammensetzung nach irgendeinem der Ansprüche 1 bis 9, wobei das Verfahren folgende Verfahrensschritte umfasst
a) Mischen der Binderkomponente (A) und der Härterkomponente (B),
b) Zugabe der festen Komponente (C) zu der in Schritt a) erhaltenen Mischung unter Rühren, um eine Bindermischung zu erhalten,
c) Verarbeiten der erhaltenen Bindermischung durch
c1) Aufbringen der Bindermischung auf die Oberfläche eines oder mehrerer Bauteile zur Beschichtung,
c2) Aufbringen der Bindermischung auf die Oberfläche eines oder mehrerer Bauteile und Aufsetzen eines oder mehrerer weiterer Bauteile auf die aufgetragene Bindermischung zum Verbinden der Bauteile oder
c3) Einbringen der Bindermischung in den Zwischenraum zwischen zwei oder mehr Bauteilen zum Abdichten oder Verfugen,
d) gegebenenfalls Glätten und/oder Entlüften der auf- bzw. eingebrachten Bindermischung und
e) Aushärten der Bindermischung,
wobei Wasser in der Binderkomponente (A) und/oder der Härter-komponente (B) enthalten ist und/oder als gesonderte Komponente vor oder während der Zugabe der festen Komponente (C) zugegeben wird.

11. Verfahren nach Anspruch 10, **dadurch gekennzeichnet, dass** in Schritt a) eine oder mehrere zusätzliche flüssige Komponenten zugemischt werden und/oder in Schritt b) eine oder mehrere zusätzliche feste Komponenten zugemischt werden.

12. Produkt, umfassend ein oder mehrere Bauteile, die mit einer gehärteten Bindermischung beschichtet, verbunden, abgedichtet oder verfugt sind, erhältlich nach einem Verfahren nach Anspruch 10 oder 11.

13. Verwendung einer mehrkomponentigen Zusammensetzung nach irgendeinem der Ansprüche 1 bis 9 als Beschichtungszusammensetzung, insbesondere als selbstverlaufende Bodenausgleichsmasse für einen Bodenbelag, oder als Mörtel.

## Claims

1. Multicomponent composition comprising
A) a binder component (A) comprising at least one epoxy resin,
B) a hardener component (B) comprising at least one amine compound as aminic curing agent, and
C) a solid component (C) comprising a hydraulic inorganic binder,
**characterized in that** the hydraulic inorganic binder is a ternary binder composed of high-alumina cement, calcium sulfate, and Portland cement, the solid component (C) comprising 5 to 20 wt% of high-alumina cement, 3 to 13 wt% of calcium sulfate, and 3 to 10 wt% of Portland cement, and the total amount of epoxy resin and aminic curing agent in the multicomponent composition, based on the total weight of the multicomponent composition, being not more than 2 wt%.

2. Multicomponent composition according to Claim 1, **characterized in that** the calcium sulfate is selected from the anhydrite, dihydrate, hemihydrate, or a mixture thereof, the hemihydrate being preferred.

3. Multicomponent composition according to either one of Claims 1 to 2, **characterized in that** the binder component (A) and/or the hardener component (B) comprise water.

4. Multicomponent composition according to any one of Claims 1 to 3, **characterized in that** the solid component (C) comprises one or more fillers, at least one filler being preferably sand, and optionally one or more additives, the filler content in component (C) being preferably at least 36 wt% and more preferably at least 57 wt%.

5. Multicomponent composition according to any one of Claims 1 to 4, **characterized in that** the total amount of epoxy resin and aminic curing agent in the multicomponent composition, based on the total weight of the multicomponent composition, is not less than 0.1 wt%.

6. Multicomponent composition according to any one of Claims 1 to 5, **characterized in that** the fraction of the ternary binder in the solid component (C) is in the range from 3 to 40 wt%.

7. Multicomponent composition according to any one of Claims 1 to 6, **characterized in that** the at least one epoxy resin comprises at least one epoxy resin and a reactive diluent.

8. Multicomponent composition according to any one of Claims 1 to 7, **characterized in that** the at least one amine compound is a polyamine, a polyaminoamide, a polyamine-polyepoxide adduct, a polyaminoamide-polyepoxide adduct, or a mixture of at least two of these compounds.

9. Multicomponent composition according to any one of Claims 1 to 8, **characterized in that** the multicomponent composition comprises a polymeric binder which is solid at 23°C and which is preferably an ethylene-vinyl acetate copolymer that optionally comprises one or more further comonomers.

10. Method for coating, joining, sealing, or grouting components with a multicomponent composition according to any one of Claims 1 to 9, the method comprising the following method steps:
a) mixing the binder component (A) and the hardener component (B),
b) adding the solid component (C) to the mixture obtained in step a), with stirring, to give a binder mixture,
c) processing the resulting binder mixture by
c1) applying the binder mixture to the surface of one or more components for coating,
c2) applying the binder mixture to the surface of one or more components and placing one or more further components onto the applied binder mixture in order to join the components, or
c3) introducing the binder mixture into the space between two or more components for sealing or grouting,
d) optionally smoothing and/or deaerating the applied or introduced binder mixture, and
e) curing the binder mixture,
where water is present in the binder component (A) and/or in the hardener component (B) and/or is added as a separate component before or during the addition of the solid component (C).

11. Method according to Claim 10, **characterized in that** in step a) one or more additional liquid components are admixed and/or in step b) one or more additional solid components are admixed.

12. Product comprising one or more components coated, joined, sealed, or grouted with a cured binder mixture, obtainable by a method according to Claim 10 or 11.

13. Use of a multicomponent composition according to any one of Claims 1 to 9 as a coating composition, more particularly as a self-leveling flooring compound for a floor covering, or as mortar.

## Revendications

1. Composition multicomposante, comprenant :
A) un composant liant (A) comprenant au moins une résine époxy,
B) un composant durcisseur (B) comprenant au moins un composé d'amine en tant que durcisseur aminé et
C) un composant solide (C) comprenant un liant inorganique hydraulique,
**caractérisée en ce que** liant inorganique hydraulique est un liant ternaire composé de ciment alumineux, de sulfate de calcium et de ciment Portland, le composant solide (C) contenant 5 à 20 % en poids de ciment alumineux, 3 à 13 % en poids de sulfate de calcium et 3 à 10 % en poids de ciment Portland, et la quantité totale de résine époxy et de durcisseur aminé dans la composition multicomposante, par rapport au poids total de la composition multicomposante, n'étant pas supérieure à 2 % en poids.

2. Composition multicomposante selon l'une quelconque des revendications 1, **caractérisée en ce que** le sulfate de calcium est choisi parmi l'anhydrite, le dihydrate, l'hémihydrate ou un mélange de ceux-ci, l'hémihydrate étant préféré.

3. Composition multicomposante selon l'une quelconque des revendications 1 à 2, **caractérisée en ce que** le composant liant (A) et/ou le composant durcisseur (B) contiennent de l'eau.

4. Composition multicomposante selon l'une quelconque des revendications 1 à 3, **caractérisée en ce que** le composant solide (C) comprend une ou plusieurs charges, au moins une charge étant de préférence le sable, et éventuellement un ou plusieurs additifs, la teneur en charges du composant (C) étant de préférence d'au moins 36 % en poids et de manière davantage préférée d'au moins 57 % en poids.

5. Composition multicomposante selon l'une quelconque des revendications 1 à 4, **caractérisée en ce que** la quantité totale de résine époxy et de durcisseur aminé dans la composition multicomposante, par rapport au poids total de la composition multicomposante, n'est pas inférieure à 0,1 % en poids.

6. Composition multicomposante selon l'une quelconque des revendications 1 à 5, **caractérisée en ce que** la proportion de liant ternaire dans le composant solide (C) se situe dans la plage allant de 3 à 40 % en poids.

7. Composition multicomposante selon l'une quelconque des revendications 1 à 6, **caractérisée en ce que** l'au moins une résine époxy comprend au moins une résine époxy et un diluant réactif.

8. Composition multicomposante selon l'une quelconque des revendications 1 à 7, **caractérisée en ce que** ledit au moins un composé aminé est une polyamine, un polyaminoamide, un adduit de polyamine-polyépoxyde, un adduit de polyaminoamide-polyépoxyde ou un mélange d'au moins deux de ces composés.

9. Composition multicomposante selon l'une quelconque des revendications 1 à 8, **caractérisée en ce que** la composition multicomposante contient un liant polymère solide à 23 °C, qui est de préférence un copolymère d'éthylène-acétate de vinyle, qui comprend éventuellement un ou plusieurs comonomères supplémentaires.

10. Procédé de revêtement, de liaison, d'étanchéification ou de jointoiement d'éléments avec une composition multicomposante selon l'une quelconque des revendications 1 à 9, le procédé comprenant les étapes de procédé suivantes :
a) le mélange du composant liant (A) et du composant durcisseur (B),
b) l'ajout du composant solide (C) au mélange obtenu à l'étape a) sous agitation, pour obtenir un mélange de liant,
c) l'usinage du mélange de liant obtenu par
c1) l'application du mélange de liant sur la surface d'un ou de plusieurs éléments pour le revêtement,
c2) l'application du mélange de liant sur la surface d'un ou de plusieurs éléments et la superposition d'un ou de plusieurs autres éléments sur le mélange de liant appliqué pour la liaison des éléments, ou
c3) l'introduction du mélange de liant dans l'espace intermédiaire entre deux éléments ou plus pour l'étanchéification ou le jointoiement,
d) éventuellement l'égalisation et/ou l'aération du mélange de liant appliqué ou introduit, et
e) le durcissement du mélange de liant,
de l'eau étant contenue dans le composant liant (A) et/ou le composant durcisseur (B) et/ou étant ajoutée en tant que composant séparé avant ou pendant l'ajout du composant solide (C).

11. Procédé selon la revendication 10, **caractérisé en ce qu'**un ou plusieurs composants liquides supplémentaires sont incorporés à l'étape a) et/ou un ou plusieurs composants solides supplémentaires sont incorporés à l'étape b).

12. Produit, comprenant un ou plusieurs éléments, qui sont revêtus, reliés, étanchéifiés ou jointoyés avec un mélange de liant durci, pouvant être obtenu par un procédé selon la revendication 10 ou 11.

13. Utilisation d'une composition multicomposante selon l'une quelconque des revendications 1 à 9 en tant que composition de revêtement, notamment en tant que masse d'égalisation pour le sol autonivelante pour un revêtement de sol, ou en tant que mortier.
